# EUROPÄISCHE PATENTSCHRIFT

(11) **EP 3 371 068 B1**
(45) Veröffentlichungstag und Bekanntmachung des Hinweises auf die Patenterteilung: **23.12.2020**
(21) Anmeldenummer: 16714376.7
(22) Anmeldetag: 31.03.2016
(51) Int. Cl.: B65D 8/04, B65D 6/32, B23K 26/28, B23K 26/262, B67D 1/08

(54) **EINWEG-GETRÄNKEFASS AUS EDELSTAHL UND VERFAHREN ZUM HERSTELLEN DESSELBEN**
SINGLE-USE BEVERAGE BARREL MADE OF STAINLESS STEEL AND METHOD OF PRODUCING THE SAME
BOÎTE DE BOISSON À USAGE UNIQUE EN ACIER ET MÉTHODE POUR SA PRODUCTION

(30) Priorität: 06.11.2015 DE 102015014276
(43) Veröffentlichungstag der Anmeldung: 12.09.2018
(73) Patentinhaber: Cool-System Keg GmbH, 90763 Fürth (DE)
(72) Erfinder: GRAF, Gerd-Albrecht, 90763 Fürth (DE)
(74) Vertreter: Maiwald Patent- und Rechtsanwaltsgesellschaft mbH
(86) Internationale Anmeldenummer: PCT/EP2016/057129
(87) Internationale Veröffentlichungsnummer: WO 2017/076517

(56) Entgegenhaltungen:
- WO-A1-92/09489
- WO-A1-92/09489
- WO-A1-92/09489
- WO-A1-2015/122779
- WO-A1-2015/122779
- WO-A2-2004/089807
- WO-A2-2004/089807
- DE-A1- 10 138 365
- DE-A1- 10 138 365
- DE-A1- 10 138 365
- DE-U1-202014 009 365
- DE-U1-202014 009 365
- DE-U1-202014 009 365
- GB-A- 2 480 671
- GB-A- 2 480 671
- US-A1- 2007 246 446
- US-A1- 2007 246 446

## Beschreibung

Die Erfindung betrifft ein Einweg-Getränkefass für kohlensäurehaltige Getränke, insbesondere für Bier und Bier-Mixgetränke.

Stand der Technik sind Mehrwegfässer aus Edelstahl mit Füllmengen zwischen 20 und 50 Litern. Diese Gebinde bestehen aus zwei tiefgezogenen Edelstahl-Halbschalen, die mittig zu einem Hohlraum verschweißt sind. An der unteren Halbschale ist außen ein stabiler Standring und an der oberen ein Griffring angeschweißt. In der oberen Halbschale ist mittig ein Fitting eingeschraubt, von dem aus ein metallisches Steigrohr auf den Boden des Fasses reicht. Stand- und Griffring sind so geformt, dass die Fässer stapelbar sind. Dank der tiefgezogenen Halbschalen sind die Fässer nahezu rückstandslos über den Fitting entleerbar. Die massive Bauart lässt bei sachgemäßer Behandlung und Wartung des Fittings eine mittlere Nutzungsdauer von 20 Jahren bei ca. 60 Umläufen erwarten. Bezüglich Umweltschutz, Energieeinsatz, Sicherheit und Haltbarkeit sowie Geschmacksneutralität gegenüber dem eingefüllten Getränk sind Edelstahlfässer seit Jahrzehnten die erste Wahl für Brauereien und Getränkeabfüller.

Seit einigen Jahren sind auch Kunststofffässer aus PET für den Exportmarkt im Einsatz. Diese sind gegenüber den massiven Edelstahlfässern deutlich leichter und kostengünstiger. Sie sind nur für eine einzige Befüllung ausgelegt, müssen nicht zum Abfüller zurücktransportiert und nicht gereinigt werden. Bei langen Transportstrecken und in Märkten mit höheren Verlustquoten errechnen sich damit durchaus Kostenvorteile gegenüber einem klassischen Mehrweg-Getränkefass aus Edelstahl. Allerdings zeigen Kunststofffässer auch Nachteile. Bei hohen Umgebungstemperaturen übersteigt häufig der Innendruck den zulässigen Betriebsdruck von maximal 3,5 bar. Die Berstdrücke der Fässer liegen zwar höher, bei etwa 9 bar, aber die Volumenausdehnung bei höheren Drücken und Temperaturen ist erheblich und für kohlensäurehaltige Getränke wie Bier ungeeignet. Bei einer Volumenausdehnung der Kunststoffblase tritt nämlich Kohlendioxid irreversibel aus dem Getränk in den entstandenen Hohlraum aus und lässt das Getränk schal zurück. Bei Gebinden aus Kunststoff kann es vorkommen, dass die berstende Fasshülle in Einzelteilen lebensbedrohend auseinanderfliegt. In einigen Ländern hat dieses Gefahrenpotential bereits zu einem Verbot der Kunststofffässer geführt. Grundsätzlich müssen PET-Gebinde gegen Licht durch zusätzliche Vorkehrungen geschützt werden. Sensorische Test registrierten auch Kunststoffzusatzstoffe wie Weichmacher im Getränk, die aus der Hülle eindiffundieren. Ein weiterer Kritikpunkt ist die relativ hohe Durchlässigkeit von Kohlendioxid und Sauerstoff durch die PET-Hüllen. Hier müssen spezielle Maßnahmen ergriffen werden, um dies zu reduzieren. Entweder wird das PET-Material nachbehandelt, um die Diffusion zu reduzieren oder aber man verbaut einen separaten Foliensack innerhalb der Kunststoffblase. Der Foliensack besteht wiederum aus einer Mehrschichtfolie, in die eine separate Aluminiumversiegelung integriert ist. Die Haltbarkeit eines Premiumgetränkes in einer Kunststoffhülle ist kürzer als die Standzeit in einem Standardgebinde aus Edelstahl.

Eine weitere, häufig eingesetzte Gebindeart sind Einweg-Getränkedosen aus Weißblech. Diese dreiteiligen Fässchen bestehen aus einem längsgeschweißten, expandierten Mantelteil und je einem Boden- und Deckelteil. Die drei Bauteile sind miteinander mittels Bördelnähten gas- und druckdicht verbunden. Die Innenfläche des Behälters ist zusätzlich mit einer Lackschicht versiegelt. Die Dosen werden durch eine zentrische Öffnung im Deckelteil gefüllt. Die Öffnung wird anschließend mit einem elastischen Pfropfen verschlossen. Gezapft wird entweder über einen im Mantelteil eingepressten Zapfhahn aus Kunststoff oder durch die Öffnung im Deckelteil. Ein Steigrohr ist nicht vorhanden. Im Einsatz sind vor allem 5-Liter Dosen, die überwiegend an den Endkonsumenten verkauft werden. Ein Einsatz für den gewerblichen Getränkeausschank ist nicht sinnvoll, da das Füllvolumen hierfür zu klein ist. Versuche, dieses sogenannte Partyfass für den gewerblichen Einsatz größer zu bauen, waren nicht erfolgreich. Insbesondere konnte die geforderte Druckstabilität bei hohen Temperaturen und den raueren Umgebungsanforderungen im Exportmarkt nicht dauerhaft gewährleistet werden. Weißblech neigt zudem an den Schweißnähten und Schnittkanten zu Korrosion. Ein Anschluss an professionelle Schankanlagen ist nicht möglich.

Gescheitert sind auch Versuche, ein Einwegfass aus einer verzinkten Stahlblechhülle und einem innenliegenden Folienbeutel zu vermarkten. Problematisch sind bei dieser Kombination unter anderem Leckagen an der Verbindungsstelle des Folienbeutels mit dem Fitting und der Stahlblechhülle. Weitere Fässer sind aus DE 101 38 365 A1, WO 92/09489 A1, WO 2015/122779 A1, DE 20 2014 009365 U1 und US 2007/246446 A1 bekannt.

Aufgabe der Erfindung ist ein kostengünstiges, steriles Einweg-Getränkefass, das die Nachteile heute bekannter Einweg-Lösungen vermeidet.
Gelöst wird diese Aufgabe durch die kennzeichnenden Merkmale des Anspruches 1. Die abhängigen Ansprüche zeigen weitere erfinderische Vorrichtungen.
Die Verwendung von Edelstahl, insbesondere in der Legierung 1.4301, erfüllt alle Anforderungen, die an ein Getränkefass gestellt werden. Edelstahl ist gegenüber Sauerstoff und Kohlendioxid dicht, Licht undurchlässig und geschmacksneutral. Es ist bei hohen Temperaturen sterilisierbar und selbst bei dünnen Blechstärken von weniger als 0,3 mm ausreichend berstsicher. Bei unzulässigem Überdruck öffnet sich eine Schweißnaht über die der Überdruck gefahrlos abgebaut wird.

Der Einsatz von Edelstahl gegenüber von PET erlaubt den Einsatz der Fässer in einem weiten Temperaturbereich. Zwischen -40°C und +80°C bleiben die Fässer formstabil und funktionssicher.

Der Fassmantel ist mittels Laserschweißtechnik zu einem Zylinder längsgeschweißt. Fortschritte in der Schweißtechnik erlauben es, dünne Edelstahlbleche stumpf, d.h. ohne Überlappung miteinander zu verschweißen. Erfindungsgemäß kann der Fassmantel aus Edelstahlblech mit Wanddicken von lediglich 0,25 mm dicht verschweißt werden. Insbesondere kann das Mantelteil also auch eine Wandstärke von lediglich 0,3 mm oder weniger aufweisen. Zusätzlich kann der längsgeschweißte Zylinder in einem Expansionsprozess bauchig ausgeformt und an den Stirnseiten für eine Verschweißung vorbereitet sein.

Während es grundsätzlich möglich ist, die Boden- und Deckelteile durch Verbördelung an dem zylindrisches Mantelteil zu befestigen, ist erfindungsgemäß ein Verschweißen bevorzugt, so dass im Folgenden beispielhaft meist von einem Verschweißen/einer Schweißnaht gesprochen werden wird, ohne dass dies einschränkend wirken soll.

Die aus 0,8 mm oder dünnerem Edelstahlblech tiefgezogenen Boden- und Deckelteile werden an die beiden Zylinderenden aufgesteckt und damit verschweißt. Vor diesem Arbeitsschritt können die drei Bauteile in bekannter Weise sterilisiert werden. Dies erfolgt entweder in einem thermischen Prozess oder mittels bekannter Reinigungsmittel. Bekannte Sterilisierungsmethoden wie etwa thermische Behandlungen durch Dampfbeaufschlagung des Innenraumes oder mittels Dampfdesinfektionsmittelgemischen (z.B. hochprozentige Wasserstoffperoxidlösungen) können auch nach dem Zusammenbau der Metallteile erfolgen.

Vorteilhaft können die drei Edelstahlteile mittels Laser verschweißt werden. Der Einsatz von Edelstahl gegenüber Weißblech ermöglicht es, auch bei sehr dünnen Blechstärken Schweißnähte anzufertigen, die Innendrücken von bis zu 15 bar standhalten. Grundsätzlich können die tiefgezogenen Boden- und Deckelteile mit seinen Wölbungen nach innen oder nach außen zeigend eingesetzt werden. Wenn die Wölbungen nach innen zeigen, muss das Mantelteil entsprechend höher geschnitten sein, um die gleiche Füllmenge zu ermöglichen. Diese Variante hat aber den Vorteil, dass der Fitting bzw. der Zapfkopf durch die höhere Mantellinie besser geschützt sind. Ein weiterer Vorteil besteht darin, dass der Griffring kürzer und damit kostengünstiger ausgeführt werden kann oder aber, wenn die Mantelhöhe dafür ausreicht, ganz entfallen kann. Bei geschickter Wahl der Ausführungsform, kann unter Umständen das Deckelteil und das Bodenteil mit ein und demselben Tiefziehwerkzeug hergestellt werden.

Wenn das Bodenteil mit seiner Wölbung nach innen ragend eingesetzt ist, muss das Steigrohr entsprechend geformt sein, um auch die tiefste Stelle, die technisch bedingt nunmehr nicht in der Mitte des Fassbodens liegt, sondern im Bereich der umlaufenden Schweißnaht liegt, zu erreichen. Erfindungsgemäß besteht das Steigrohr nicht aus einem metallischen Rohr, sondern aus einem flexiblen Schlauch, der selbstdichtend auf eine Tülle im Fitting aufgesteckt ist und wegen seiner Flexibilität bis in den tiefsten Bereich des Bodenteils verzogen ist. Der flexible Schlauch kann aus lebensmitteltauglichen Kunststoffen wie beispielsweise Polypropylen oder Polyamid ausgeführt sein. Der Innendurchmesser des Schlauches kann zudem kleiner (z.B. 6 bis 10 mm) gewählt werden als bei den bekannten Standardfässern, da keine Reinigung des Fasses vorgesehen ist, bei der ein großer Durchmesser des Steigrohres zwingend notwendig ist.

Beim Herstellprozess wird nach dem Einsetzen des Fittings das Fass mit Stickstoff gespült und anschließend mit Kohlendioxid oder einem anderen Inertgas, beispielsweise Stickstoff, auf ca. 1,5 bar vorgespannt. Auf diese Weise bleibt es innen steril und kann sofort und maschinell auf allen schnelllaufenden Füllstationen gefüllt werden. Füllgeschwindigkeiten von 1,5 dm³/sec sind damit erreichbar. Wird das Fass mit Innendruck vom Hersteller an den Abfüller versandt, kann über einen Drucksensor an der Füllstation die Dichtheit und damit zugleich auch die Sterilität des Fasses kontrolliert werden. Dünnwandige Fässer sind zudem im vorgespannten Zustand gegenüber Stößen während des Transports deutlich unempfindlicher.

Die Verwendung von Edelstahlblechen für Einwegfässer wurde von der Fachwelt bisher ausgeschlossen, da schon allein der höhere Edelstahlpreis einer erfolgreichen Verwendung entgegenstand. Durch den Einsatz sehr dünner Bleche reduziert sich der Preisnachteil sogar gegenüber verzinkten bzw. verzinnten Blechen stark. Eine neue Schweißtechnologie erlaubt es, dünnwandige Edelstahlrohre mittels Laser in der erforderlichen Länge und Stabilität herzustellen. Der seit Jahrzehnten in der Getränkeindustrie favorisierte Werkstoff kann nunmehr auch für Einwegfässer zum Einsatz kommen.

Da das erfindungsgemäße Fass nicht wie die wieder befüllbaren Standard-Edelstahlkegs aus zwei extrem tiefgezogenen Halbschalen gefertigt werden muss, ergibt sich hier ein weiterer Kostenvorteil. Das Bodenteil kann in den Fassmantel so eingesetzt werden, dass das Fass stabil auf der Schweißnaht stehen kann. Damit entfällt der zusätzliche, untere Standring wie er beim Standardkeg obligatorisch ist. Die beiden Schweißnähte am erfindungsgemäßen Fass können zugleich als Berstsicherung ausgeführt werden. An der oberen Schweißnaht kann ein Griffring aus Kunststoff oder Metall aufgeklickt werden. Seine Bauform kann so gewählt werden, dass die Abmessungen der unteren Schweißnaht in den Griffring passen, um eine sichere Stapelbarkeit zu ermöglichen. Die Höhe des aus Polypropylen/(HD)PE oder Edelstahl gefertigten Griffrings ist zudem so gewählt, dass der Fitting samt Zapfkopf nicht nach oben übersteht und dadurch besser geschützt sind.
Vorteilhaft sind auch Ausgestaltungen, die die Stapelbarkeit mittels Styroporformteilen ermöglicht. Diese Formteile können z.B. mittels Spanngurte oder anderer bekannter Verpackungslösungen auf dem Deckelteil fixiert sein. Insbesondere bei großen Fässern kann die Fixierung gleichzeitig zum Tragen des Fasses dienen.

Denkbar ist es im Rahmen der Erfindung auch, einen Standring und einen Kopfring an der Außenseite des Getränkefasses zu befestigen, beispielsweise zu verkleben. Dies ermöglicht es inbesondere, statt dem beschriebenen Einsetzen von Bodenteil (bzw. Deckelteil), diese auch von außen aufzubringen. Der Standring und der Kopfring können beispielsweise aus Kunststoff bestehen und/oder in ihrer Geometrie derart aufeinander abgestimmt sein, dass mehrere Getränkefässer stabil aufeinander gestapelt werden können. Beispielsweise können Vorsprünge des Kopfrings und/oder Standrings in Vertiefungen des Standrings und/oder Kopfrings eingreifen.

Das erfindungsgemäße Einweg-Getränkefass ist auf eine Dauerdruckfestigkeit von mindestens 6,5 bar ausgelegt. Die Wandstärke des zylindrischen Mantels muss hierfür lediglich 0,25 mm betragen. Die tiefgezogenen Boden- und Deckelteile bestehen vorwiegend aus 0,5 bis 0,8 mm dickem Edelstahl. Bei einem Fassdurchmesser von 290 mm kann auch für ein Füllvolumen von etwas über 30 Liter noch eine Gesamthöhe einschließlich Griffring von weniger als 600 mm eingehalten werden. Bei dieser Fasshöhe passen die Gebinde noch unter gewöhnliche, professionelle Ausschankanlagen. Der relativ schlanke Durchmesser von 280 mm erlaubt zudem eine optimale Beladung auf Standard-Paletten. Bei zwei bis dreilagiger Stapelung eröffnet diese Geometrie eine optimale Beladung auf Lkws und in Schiffscontainern. Ein 30-Liter-Fass mit einem Durchmesser von 280 mm ist für den Exportmarkt somit wirtschaftlich sehr interessant. Aber auch davon abweichende Fass-Durchmesser bzw. -Höhen und somit andere Fassvolumina sind erfindungsgemäß herstellbar. Insbesondere sind Fassdurchmesser zwischen 130 und 500 mm und Fasshöhen bis 800 mm wirtschaftlich besonders interessant. Allgemein ist es bevorzugt, wenn das Fassungsvermögen des Einweg-Getränkefasses gemäß der Erfindung im Bereich von 6 bis 50 Litern liegt.

Der metallische Restwert des erfindungsgemäßen Einwegfasses ist relativ hoch. Ein Recycling ist damit auch in Ländern der Dritten Welt ohne zusätzliche, administrative Auflagen sichergestellt.

Im Deckelteil des Fasses ist ein Fitting integriert. Auch dieses Bauteil muss denselben Druck- und Temperaturanforderungen wie die Edelstahlkomponenten standhalten. Der Fitting ist erfindungsgemäß aus Kunststoff gefertigt und verschließt die mittig angeordnete Öffnung im Deckelteil. Der Fitting realisiert zwei Strömungskanäle gleichzeitig. Zum einen verschließt er die Flüssigkeitsleitung, die über ein Steigrohr vom Boden des Fasses bis zum Fitting reicht und zum anderen dichtet er eine Gasleitung, über welche Kohlensäure zum Zapfen des Getränkes in das Fass gepresst wird. Beide Öffnungen müssen demzufolge auch während der gesamten Lager- und Transportzeiten den Fassinhalt steril abschließen. Zum Zapfen des Fassinhalts wird auf den Fitting ein passgenauer Zapfkopf aufgesteckt, über den die Flüssigkeitsleitung aseptisch geöffnet werden kann. Zum einen muss er das Getränk ohne übermäßige Schaumbildung ausströmen lassen und zum anderen das Einströmen von Druckgasen wie komprimierter Luft oder Kohlendioxid gefahrlos sicherstellen.

Erfindungsgemäß sind die Bauteile Fitting und Zapfkopf so aufeinander abgestimmt, dass sich das Einwegfass auf einer branchenüblichen Füllanlage ohne Verwendung des Zapfkopfes abfüllen und später an einer professionellen Zapfanlage unter Verwendung des Zapfkopfes gefahrlos entleeren lässt. Der Zapfkopf hat demzufolge Gas- und Flüssigkeits-Anschlüsse mit den Maßen 5/8 Zoll, die mittels Adapter auf ½ Zoll reduzierbar sind. Eine Ausführung mit ½ Zoll Anschlüssen und 5/8 Zoll Adaptern ist optional ebenfalls möglich. Dadurch kann das Fass weltweit an nahezu jeder Zapfanlage angeschlossen werden.

Erfindungsgemäß kann der Zapfkopf auf den Fitting aufsteck- und arretierbar ausgebildet sein. Die Dichtungsmittel in den Strömungskanälen sind somit gleichzeitig auch gegen Verschmutzung und versehentliches Öffnen geschützt. Ein geeignet angebrachtes Siegel kann diesen ungeöffneten Zustand signalisieren. Um den Inhalt zu zapfen, muss zunächst das Dichtsiegel entfernt oder beschädigt werden. Beim Verdrehen des Zapfkopfes auf dem Fitting kann das Dichtmittel der Flüssigkeitsleitung geöffnet bzw. wieder geschlossen werden. Beim Entfernen der Schlauchleitungen an den Anschlüssen am Zapfkopf und gleichzeitigem Verdrehen des Zapfkopfes in die geöffnete Position kann das Fass druckfrei gestellt werden.
Letztendlich sind zahlreiche Lösungen möglich, um mittels einer Drehbewegung des Zapfkopfes und der damit einhergehenden Einwirkung auf den Fitting, dessen Strömungskanäle zu öffnen bzw. zu verschließen.

Erfindungsgemäß kann durch geeignet eingebaute Sicherungsmittel oder Arretierungen, die beim mutwilligen Entfernen des Zapfkopfes vom Fitting zur Wirkung kommen, das Fass druckfrei gestellt und der Fitting irreversibel beschädigt werden. Eine nochmalige, unerlaubte Wiederbefüllung des Fasses ist dadurch ausgeschlossen. Da die bauartbedingte Konstruktion des Fasses (verbleibende Restfüllmenge usw.) eine Reinigung und sterile Wiederbefüllung ausschließt, ist diese Sicherheitsmaßnahme zweckmäßig und für einige Anwendungsfälle notwendig.
Die Anbindung des Fittings im Deckelteil kann erfindungsgemäß über einen elastischen Dichtring erfolgen, der zwischen Metall und Kunststoff-Fitting eingeklemmt wird. An die Öffnung im Deckelteil kann hierzu eine Muffe angeschweißt sein, die den Fitting passgenau aufnimmt und zugleich fixiert. Die Muffe kann hierzu an die Öffnung im Deckelteil mittels Buckelnahtschweißung oder anderen bekannten Schweißverfahren gasdicht angeschweißt sein.

Erfindungsgemäß wird die Muffe vor dem Verbinden des Deckelteils und des Mantelteils bzw. des Bodenteils von der Innenseite her in die Offnung des Deckelteils eingesetzt. Zweckmäßigerweise weist die Muffe dazu eine an der Innenseite des Deckelteils anliegende, umlaufende Anschlagfläche auf, die durch einen vorstehenden Profilabschnitt realisiert werden kann. Zwischen der Anschlagfläche und der Innenseite des Deckelteils und/oder als entsprechende Ausbildung der Anschlagfläche kann ein Dichtelement vorgesehen werden, beispielsweise ein Dichtring oder ein durch Vulkanisierung auf die Anschlagfläche aufgebrachtes Dichtelement. Vorteilhafterweise wird mit steigendem Innendruck die Anschlagfläche fester gegen die Innenseite des Deckelteils gepresst, so dass mit höherem Druck eine verbesserte Dichtung entsteht. Ferner weist die Muffe zweckmäßigerweise einen aus der Öffnung nach außen hervorragenden Zylinderabschnitt auf. An dem Zylinderabschnitt kann ein Außengewinde vorgesehen sein, das die Fixierung der Muffe nach dem Einsetzen von außen her unter Nutzung eines Fixierteils, beispielsweise einer Mutter, mit entsprechendem Gegen-Innengewinde erlaubt.

Schließlich ist es in besonders vorteilhafter Weise auch möglich, gänzlich auf eine Muffe zu verzichten und den Fitting selbst vor dem Verbinden des Deckelteils und des Mantelteils bzw. des Bodenteils von der Innenseite her in die Öffnung des Deckelteils eingesetzt wird. Dabei ist bevorzugt, wenn der Fitting eine an der Innenseite des Deckelteils anliegende, umlaufende Anschlagfläche aufweist, die durch einen vorstehenden Profilabschnitt realisiert werden kann. Zwischen der Anschlagfläche und der Innenseite des Deckelteils und/oder als entsprechende Ausbildung der Anschlagfläche, insbesondere als Dichtlippe, kann ein Dichtelement vorgesehen werden, beispielsweise ein Dichtring oder ein durch Vulkanisierung auf die Anschlagfläche aufgebrachtes Dichtelement. Das Dichtelement wird bei Innendruckerhöhung, wie auch bezüglich der Muffe schon beschrieben, gegen das Deckelteil verpresst, so dass die Dichtigkeit mit steigendem Innendruck ansteigt. Auch der Fitting weist bevorzugt einen nach außen hin im Wesentlichen zylinderförmigen Ausragabschnitt aus, der nach außen durch die Öffnung aus dem Deckelteil herausragt. An dem Ausragabschnitt kann ein Außengewinde vorliegen, beispielsweise ein M36-Gewinde, das es erlaubt, den Fitting von außen mit einer Mutter mit entsprechendem Innengewinde vor dem Herausfallen zu bewahren. Auch alternative Befestigungsvarianten, beispielsweise durch einen Stift oder Verklebung, sind denkbar. Mit Vorteil entfällt dann die Muffe und ein Verfahrensschritt zum Einbringen des Fittings in die Muffe, was die Herstellung deutlich einfacher und kostengünstiger gestaltet. Ferner ergibt sich so ein Schutz vor einem Missbrauch: Eine Demontage des Fitting ist nur möglich, wenn das Fass zerstört wird.
Die Ausgestaltung mit einem von Innen eingesetzten Fitting läßt sich herstellungstechnisch besonders einfach und bevorzugt dann realisieren, wenn das Mantelteil und das Deckelteil mittels Laser verschweißt werden. Hierbei wird (anstatt der zusammengesteckten Rohkonstruktion) der Laser als Schweißquelle, beispielsweise mittels eines Roboters, bewegt.
Nach dem Einlegen des zuvor aseptisch vorbehandelten Fittings in die Muffe wird letztere entsprechend verformt oder verpresst, um dem Fitting die notwendige Druckdichtheit zu geben. Die aseptische Vorbehandlung kann beispielsweise dadurch erfolgen, dass der Fitting samt (Steig)Schlauch kurzzeitig in ein Desinfektionsbad aus einer 3%-igen Wasserstoffperoxid-Lösung eingelegt wird. Die Edelstahlteile können im Gegensatz zu den Kunststoffteilen auch thermisch vorbehandelt werden. Hierzu werden die noch nicht verschweißten metallischen Bauteile Temperaturen von über 85°C ausgesetzt. Eine kommerzielle Sterilisierung des komplett zusammengebauten Einwegfasses durch thermische Behandlung, Dampfbeaufschlagung des Innenraumes oder durch ein Dampfdesinfektionsmittelgemisch (hochprozentige Wasserstoffperoxidlösung) kann erfindungsgemäß auch nach dem Zusammenbau aller Teile durch den Fitting hindurch erfolgen.

Das erfindungsgemäße Einweg-Getränkefass besteht folglich aus einem dreiteiligen Edelstahlbehälter und einer Öffnung, die vom Fitting verschlossen ist, der aus Kunststoff, beispielsweise Polypropylen, ausgeführt ist. Der Fitting enthält zudem zwei voneinander unabhängige Dichtungsmittel für die beiden Strömungskanäle für Flüssigkeit und Gas. Die Befüllung des Getränkefasses erfolgt an einer konventionellen Füllstation. Das Getränkefass wird hierzu kopfüber auf einen Adapter gepresst, der mindestens einen der beiden Strömungskanäle im Fitting mechanisch öffnen kann.

Erfindungsgemäß kann das Mantelteil auch mit Sicken versteift sein. Um eine hohe Packungsdichte auf Palletten zu erzielen, weisen die Sicken nach innen. Eine bauchige Expansion des Mantelteils ist technisch nicht zwingend notwendig. Funktional muss das Fass lediglich dem Anpressdruck der Füllanlagen standhalten. Branchenüblich treten dabei Anpresskräfte bis zu 10000 Newton auf. Die Sickenstruktur bzw. die gewählte Expansionsform muss diesen axialen Kräften Rechnung tragen. Im gefüllten Zustand muss das Einweg-Getränkefass bei Temperaturen von bis zu 60 °C einem Innendruck von dauerhaft 6,5 bar und kurzzeitig 7 bar standhalten.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Einweg-Getränkefass in einer ersten Ausführungsform,
- Fig. 2: das Einweg-Getränkefass 1 aus Fig. 1 in der Seitenansicht,
- Fig. 3: eine Detaillösung zum Einschrauben eines nicht gezeichneten Fittings,
- Fig. 4: eine zweite Ausführungsform eines erfindungsgemäßen Einwegfasses,
- Fig. 5: eine Muffe an einem abgeschnittenen Deckelteil,
- Fig. 6: ein Schnittbild entlang der Schnittlinie AA in der Ausgestaltung nach Fig. 5,
- Fig. 7: den Zapfkopf und den Fitting aus Fig. 6 in eigenen Schnittbildern,
- Fig. 8: einen Griffring aus Kunststoff schräg von oben,
- Fig. 9: ein Deckelteil einer weiteren Ausführungsform im Querschnitt,
- Fig. 10: einen Fitting einer weiteren Ausgestaltung,
- Fig. 11: eine dritte Ausführungsform eines erfindungsgemäßen Einweg-Getränkefasses,
- Fig. 12: eine Außenansicht des Einweg-Getränkefasses der Fig. 11.

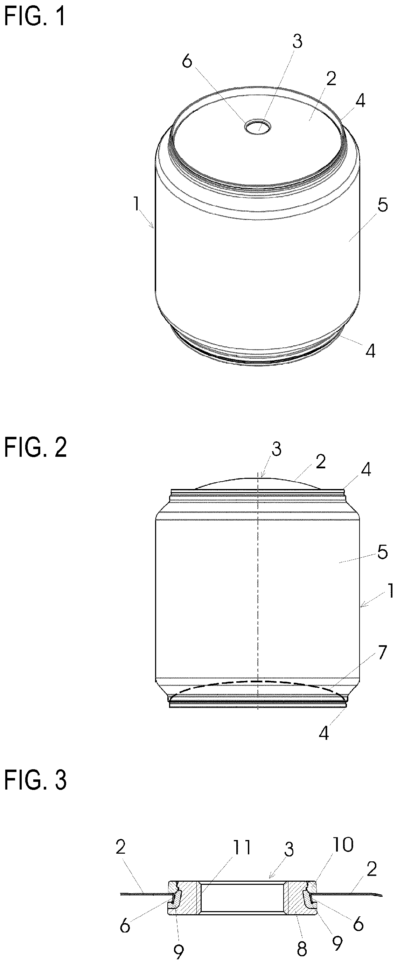

Die Zeichnung zeigt in Fig. 1 ein erfindungsgemäßes Einweg-Getränkefass 1 aus Edelstahl schräg von oben betrachtet. Es besteht aus einem längsgeschweißten, zylinderförmigen Mantelteil 5, das expandiert ist und an beiden Stirnseiten für eine Schweißnaht 4 vorgeformt ist. Der größte Durchmesser des Mantelteils 5 ist auf 290 mm begrenzt. Je geforderten Fassinhalts kann die Mantel-Höhe variieren. Für ein Volumen von 30 Litern ergibt sich eine Höhe von ca. 600 mm. Das Deckelteil 2 enthält eine Öffnung 3 mit einer nach innen gezogenen Aushalsung 6. Ein Bodenteil 7 ist in dieser Perspektive nicht sichtbar.

Fig. 2 zeigt das Einweg-Getränkefass 1 aus Fig. 1 in der Seitenansicht. Ein bauchig nach innen gestelltes Bodenteil 7 ist gestrichelt gezeichnet. Es ist mit dem Mantelteil 5 durch die untere Schweißnaht 4 gasdicht verbunden. Die untere und/oder die obere Scheißnaht 4 sind so ausgeführt, dass das Einwegfass 1 stapelbar ist und auch einer nicht sachgerechten Behandlung bei hohem Innendruck standhält. Ab einem Innendruck von über 7 bar geben die Nähte gezielt nach und lassen das Getränk gefahrlos austreten.

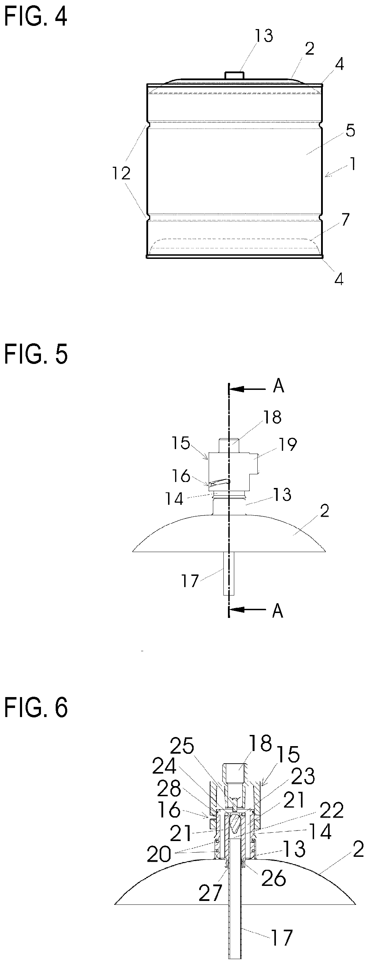

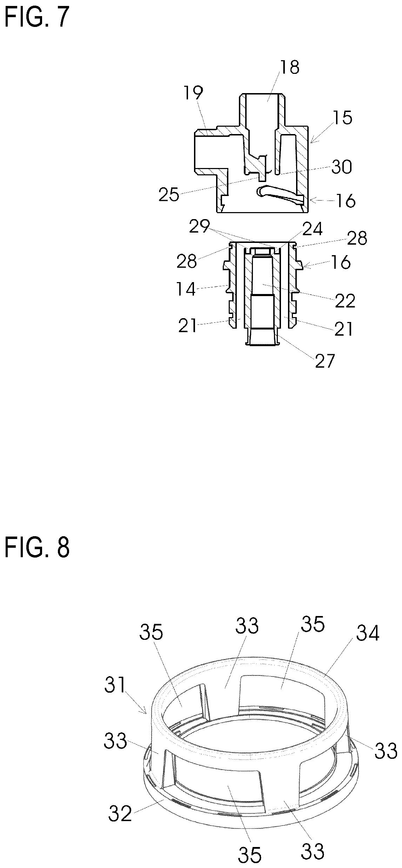

Fig. 3 zeigt eine Detaillösung zum Einschrauben eines nicht gezeichneten Fittings in die Öffnung 3 des Deckelteils 2 gemäß Fig. 1. In die Öffnung 3 ist von innen ein Kunststoffring 8 mit einem passgenauen Dichtring 9 eingedrückt. Der Dichtring 9 wird durch den nach der Befüllung anliegenden Fass-Innendruck an die Aushalsung 6 gepresst, um einen gasdichten Anschluss zu realisieren. Ohne anstehenden Innendruck wird der Kunststoffring 8 mittels eines von außen aufgeklickten Spannrings 10 fixiert. Der Kunststoffring 8 enthält zentrisch eine Gewindeöffnung 11 in welche ein (nicht gezeichneter) Fitting eingeschraubt werden kann. Der prinzipielle Aufbau eines Fittings ist in den Fig. 6 und 7 näher erläutert. Bei der Ausführungsform nach Fig. 3 werden die Kunststoffteile vor dem Zusammenbau des Fasses durch Eintauchen in eine geeignete Lösung aseptisch vorbehandelt. Die metallischen Bestandteile des Fasses sind vor dem Einsetzen der Kunststoffteile bereits thermisch auf bekannte Weise sterilisiert worden. Sie laufen hierzu durch einen Ofen, der die Metallteile auf über 85°C bis maximal 150°C erhitzt.

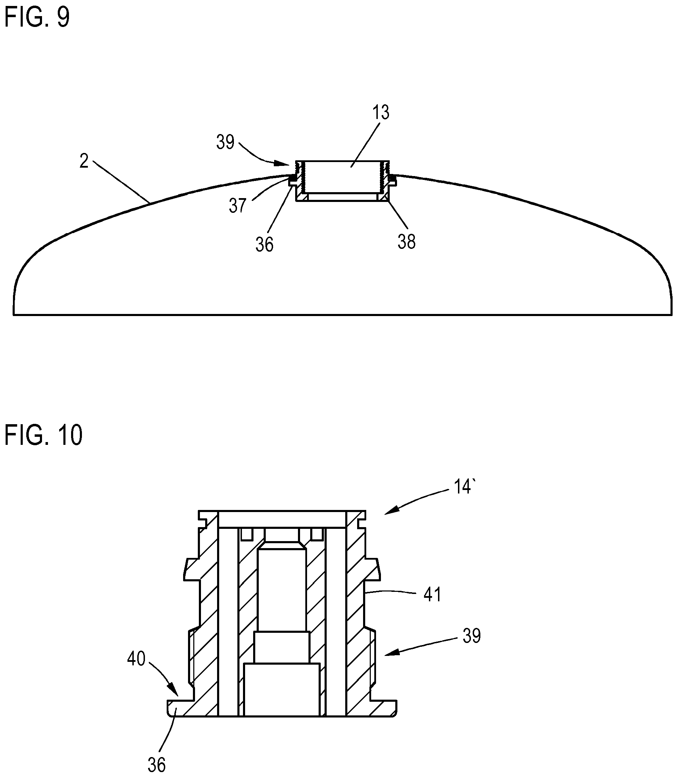

Fig. 4 zeigt eine weitere Ausführung eines erfindungsgemäßen Einwegfasses 1. Das zylindrische Mantelteil 5 ist hier nicht expandiert sondern durch nach innen gerichtete Sicken 12 stabilisiert. Die Sicken haben einen Abstand von mindestens 14 cm, um ausreichend Platz für die Anbringung einer Marken-Banderole zu schaffen. Die Boden- und Deckelteile 7, 2 müssen bei dieser Ausführung auf Grund des größeren Durchmessers etwas stabiler ausgeführt sein. Auch die Anforderungen an die Schweißnähte 4 steigen bei dieser Geometrie. Die Öffnung 3 im Deckelteil 2 ist bei dieser Version weit nach außen in Form einer Muffe 13 ausgehalst, um den Fitting ohne den Kunststoffring aus Fig. 3 fixieren zu können. Alternativ zur Aushalsung ist bei sehr dünnem Deckelmaterial eine separat gefertigte Muffe 13 aufgeschweißt oder von innen eingesteckt, wie im Folgenden im Hinblick auf Fig. 9 näher erläutert werden wird. Die Ausführung bei aufgeschweißter Muffe 13 kann mittels Buckelnaht- oder mittels Laserschweißung schnell, sicher und kostengünstig erfolgen. Erfindungsgemäß kann in die Muffe 13 der Fitting nach bekannten Herstellverfahren bereits vor dem Anschweißen auch eingespritzt bzw. eingegossen sein.

Fig. 5 zeigt an einem abgeschnittenen Deckelteil 2 eine angeschweißte Muffe 13, in die ein Fitting 14 eingebaut ist und auf den ein Zapfkopf 15 aufgesetzt ist. Der Zapfkopf 15 ist auf dem Fitting 14 drehbar und mittels einer sogenannten Bajonett-Führung 16 axial verschiebbar. Ein gekürzt gezeichneter, flexibler (Steig)Schlauch 17 reicht vom Schweißbereich des Einwegfasses in den Fitting 14. Der Zapfkopf 15 hat einen Flüssigkeits-Anschluss 18 für das Getränk und einen Gas-Anschluss 19 für Kohlendioxid oder andere Zapfgase. Beide Anschlüsse 18, 19 haben ein 5/8-Zoll-Außengewinde, ein 1/2-Zoll-Außengewinde oder andere, kundenspezifische Gewinde zum Anschrauben entsprechender Leitungen an eine professionelle Zapfanlage. Für das Zapfen ohne CO₂ und ohne die Nutzung von professionellen Zapfanlagen wird am Gas-Anschluss 19 eine Luftpumpe, Gaspatrone oder ein Kompressor mit Druckminderventil angeschlossen und am Flüssigkeits-Anschluss 18 ein Schlauch mit Dispenser montiert.

Fig. 6 ist ein Schnittbild entlang der Schnittlinie AA in der Ausgestaltung nach Fig. 5. Der Fitting 14 wird im unteren Bereich von der Muffe 13 fixiert und im oberen Teil vom Zapfkopf 15 geschützt.
Um die Details des Zapfkopfes 15 und des Fittings deutlicher darstellen zu können, sind in der Fig. 7 der Zapfkopf 15 und der Fitting 14 aus Fig. 6 in getrennten Schnittbildern ohne O-Ringe und Dichtmittel dargestellt. Die Bezeichnungen in Fig. 5 bis 7 beziehen sich somit auf dieselbe Ausführungsform.
Der untere Teil des Fittings 14 ist mittels zweier O-Ringe 20 zur Muffe 13 gedichtet. Die Muffe 13 ist nach dem Einsetzen des Fittings 14 am oberen Ende eingezogen worden, um den Fitting 14 druckfest zu halten. Durch den Fitting 14 verlaufen mehrere Gasleitungs-Bohrungen 21 und eine zentrale Flüssigkeitsleitung 22, in der sich ein Dichtkörper 23 auf und ab bewegen kann. Im oberen Endpunkt dichtet der Dichtkörper 23 an der Dichtfläche 24 des Fittings 14 die Flüssigkeitsleitung 22 ab. Den unteren Anlagepunkt des Dichtkörpers 23 bildet das obere Ende der von unten in den Fitting 14 eingesteckten Steigleitung 17. Der Dichtkörper 23 hat somit ausreichend Hub, um in der oberen Position die Flüssigkeitsleitung 22 abzuschließen und in der unteren Position die Flüssigkeitsleitung 22 möglichst weit offen zu halten. Zum Öffnen der Flüssigkeitsleitung 22 wird der Zapfkopf 15 gedreht. Über die bajonettartige Führungsnut 16 bewegt sich der Zapfkopf 15 je nach Drehrichtung axial nach oben oder nach unten. Bei einer Bewegung in Richtung auf den Fitting 14 drückt ein Pin 25 den Dichtkörper 23 nach unten von der Dichtfläche 24 weg. Der Weg für die Flüssigkeit durch die Flüssigkeitsleitung 22 wird somit frei. Bei einer entgegengesetzten Drehbewegung des Zapfkopfes 15 wird der Pin 25 wieder nach oben gezogen und der Dichtkörper 23 durch den Fassinnendruck gegen die Dichtfläche 24 gedrückt. Erfindungsgemäß funktioniert diese Lösungsvariante ohne die bei bekannten Lösungen notwendigen, metallischen Druckfedern.
Das Dichtungsmittel 26 zum Abdichten der Gasleitung ist ein Elastomer, das auf einer Tülle 27 am unteren Ende der Flüssigkeitsleitung 22 aufgespannt ist und mit seiner scheibenförmigen Dichtfläche die Gasleitungs-Bohrungen 21 abdichtet. Das Dichtungsmittel 26 ist dabei so ausgeführt, dass es stramm auf der Tülle 27 aufsitzt und die Gasleitungs-bohrungen 21 auch ohne Druckdifferenz verschließt. Es wirkt somit wie ein Rückschlagventil, das nur den Weg in das Fassinnere freigibt, wenn der anstehende Leitungsdruck höher als der Systemdruck im Fass ist. Um die einzelnen Leitungen untereinander und gegenüber der Umgebung abzudichten, sind zwei weitere Dichtungen vorgesehen. Der Fitting 14 enthält eine umlaufende Nut 28 zur Aufnahme eines O-Rings, der die Gasleitung gegenüber der Hub- und Drehbewegung des Zapfkopfes 15 am Fitting 14 zur Umgebung dichtet. Die Abdichtung der Gasleitung gegenüber der Flüssigkeitsleitung 22 wird über eine mit einer elastischen Schaumdichtung ausgefüllten Ringnut 29 gewährleistet. In die Schaumdichtung wird beim Absenken des Zapfkopfes ein geeignet geformtes Gegenstück 30 eingepresst.

Fig. 8 zeigt schließlich einen Griffring 31 aus Kunststoff schräg von oben. Eine umlaufende Ringleiste 32 kann im Bereich der oberen Schweißnaht 4 eines Einweg-Getränkefasses 1 gemäß den Fig. 1 und 2 haltbar aufgeklebt werden. Über vier Brücken 33 ist eine ebenfalls umlaufende Griffleiste 34 angeformt, deren Durchmesser und Formgebung exakt auf den Durchmesser der unteren Schweißnähte 4 eines Einwegfasses 1 abgestimmt ist. Die vier verbleibenden Aussparungen 35 erlauben eine sichere Handhabung des Fasses und bieten den Schlauchleitungen während der Zapfperiode einen sicheren Halt.

Zum Befüllen des Einweg-Getränkefasses 1 wird dieses ohne Zapfkopf kopfüber auf eine automatisch arbeitende Füllstation gepresst, wobei die beiden Strömungsleitungen mit der Füllstation in Eingriff kommen. Das Fass kann erfindungsgemäß mit Kohlendioxid oder einem anderen Inertgas vorgespannt sein. Die Befüllung mit Getränken erfolgt entgegen dem späteren Zapfvorgang über die Gasleitungs-Bohrungen 21 und nicht über die Flüssigkeitsleitung 22. Das Dichtungsmittel 26 gibt den Weg frei, sobald der anstehende Flüssigkeitsdruck den Innendruck im Fass übersteigt. Das Gas im Fass entweicht über den (Steig)Schlauch und den Dichtkörper 23 im Fitting sobald dieser durch ein geeignet ausgebildetes Werkzeug an der Füllstation zurückgedrängt wird. Die Befüllung des Fasses kann folglich auch über das Ausströmen des Gases im Fass gesteuert werden. Bei vorgespannten Fässern wird somit eine vollkommen aseptische Befüllung gewährleistet. Bei ausreichend dimensionierten Gasleitungs-Bohrungen 21 ist eine hohe Füllleistung erzielbar. In der Praxis wird die Befüllung des Einweg-Getränkefasses 1 volumetrisch erfolgen, d.h. wenn die gewünschte Getränkemenge eingeflossen ist, wird die Flüssigkeitszufuhr gestoppt und das Fass von der Füllstation abgenommen.

Fig. 9 zeigt ein Deckelteil 2 einer weiteren Ausführungsform im Querschnitt. Ersichtlich ist die Muffe 13 hier von innen vor dem Zusammenschweißen von Deckelteil 2, Mantelteil 5 und Bodenteil 7 eingesteckt. Hierzu weist sie einen Profilabschnitt 36 als Anschlag auf, der eine Anschlagfläche definiert, die vermittels eines Dichtelements 37 bei Druck an das Innere des Deckelteils 2 angepresst wird. Bei dem außen aus der Öffnung im Deckelteil 2 hervorstehenden Zylinderabschnitt 38 ist ein Außengewinde 39 zu erkennen, über das mittels eines hier nicht näher gezeigten Fixierteils mit entsprechendem Innengewinde eine zumindest vorläufige Befestigung der Muffe 13 erfolgen kann. Selbstverständlich ist auch eine alternative Befestigung wenigstens für eine Phase, in der noch kein Innendruck besteht, möglich, beispielsweise mittels Verkleben.

Alternativ und besonders bevorzugt kann statt einer Muffe 13 auch das Fitting 14 unmittelbar und selbst, bevorzugt vor einem Verschweißen mittels Laser von Mantelteil 5 und Deckelteil, in die Öffnung im Deckelteil 2, vgl. Fig. 9, eingesetzt werden. Ein entsprechend ausgestaltetes Fitting 14 zeigt Fig.10. Auch das Fitting 14 weist einen Profilabschnitt 36 auf, der eine Anschlagfläche 40 definiert, welche im durch die Öffnung gesteckten Zustand an der Innenseite des Deckelteils 2 anliegt. Auf ihr oder als Teil der Anschlagfläche 40 kann wiederum ein Dichtelement 37 (vgl. Fig. 9) vorgesehen werden.

An dem im eingesteckten Zustand nach außen aus der Deckelteil 2 ragenden Ausragabschnitt 41, der im Wesentlichen zylinderförmig ist, ist ein Außengewinde 39, hier ein M36-Gewinde, vorgesehen, über das das Fitting 14 mittels eines Fixierteils, insbesondere einer Mutter, zumindest vorläufig befestigt werden kann, was auch durch andere Befestigungsmittel, beispielsweise Verkleben oder einen durch den Ausragabschnitt 41 zu steckenden Stift, möglich ist.

Nachdem das Fitting 14 eingesetzt und zumindest vorläufig befestigt wurde, können Deckelteil 2 und Mantelteil 5 zum Verschweißen zusammengesteckt werden, bei dem bevorzugt ein Laser als Schweißquelle um die zusammengesteckte, stehende Rohkonstruktion fährt. Zu späteren Zeitpunkten wird die Anschlagfläche 40 aufgrund des Innendrucks gegen das Deckelteil 2 gepresst, so dass eine hervorragende Dichtung geschaffen wird.

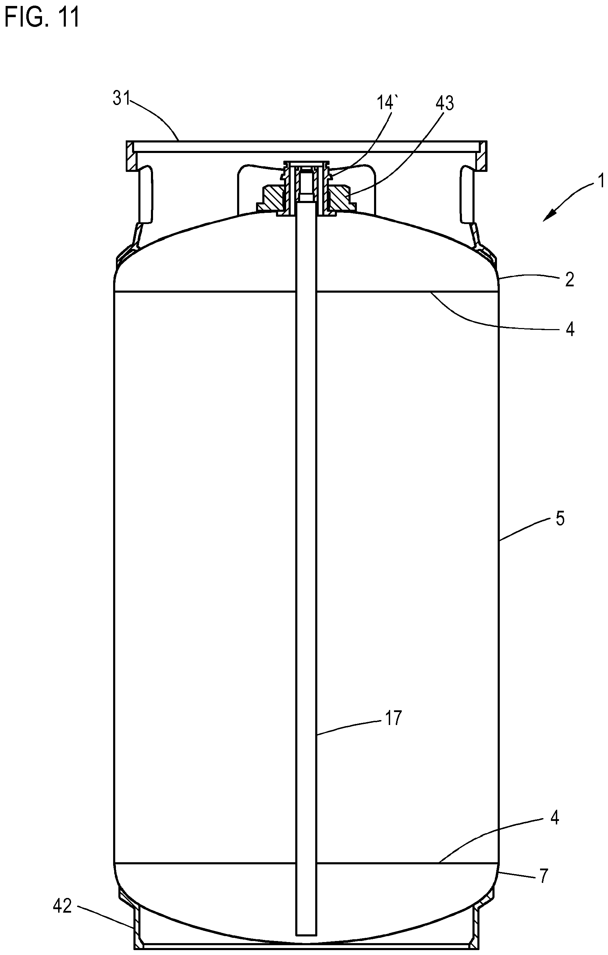

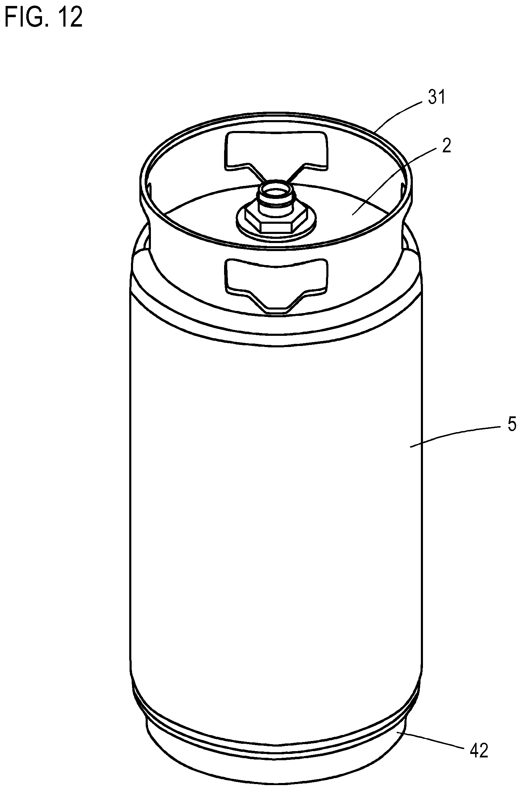

Fig. 11 und Fig. 12 zeigen schließlich eine dritte, besonders bevorzugte Ausführungsform des erfindungsgemäßen Einwegfasses 1. Das eine Dicke von 0,3mm aufweisende Mantelteil 5 ist mit dem Deckelteil 2 und dem Bodenteil 7 verschweißt, die jeweils eine Dicke von 0,5 mm aufweisen. Nachdem ein Standring 42 und ein als Griffring 31 ausgebildeter Kopfring verwendet werden, die aufeinander abgestimmt sind, wird nicht nur das Stapeln von Einwegfässern 1 erlaubt, sondern auch das Anfügen des Deckelteils 2 bzw. des Bodenteils 7 von außen, wie zuvor beschrieben wurde. Die Verbindung ist wiederum über die Schweißnähte 4 gegegeben.

Es wird der Fitting 14' der Fig. 10 verwendet, wobei zusätzlich auch das beispielsweise als Mutter ausgebildete Fixierteil 43 gezeigt ist, dessen Innengewinde mit dem Außengewinde 39 zusammenwirkt. Auch ein Sprengring kann als Fixierteil 43 verwendet werden.

## Patentansprüche

1. Einweg-Getränkefass (1) zur einmaligen Nutzung, gefertigt aus einem überwiegend zylindrischen Mantelteil (5), je einem tiefgezogenen Boden- und Deckelteil (2, 7), versehen mit einer Öffnung (3) in der Mitte des Deckelteils (2), die mittels eines Fittings (14) aus Kunststoff verschlossen ist, wobei das Mantelteil (5), das Bodenteil (7) und das Deckelteil (2) aus Edelstahl gefertigt sind,
**dadurch gekennzeichnet, dass**
das Mantelteil (5) eine Wandstärke von 0,8 mm oder weniger aufweist und das Bodenteil (7) und das Deckelteil (2) ebenfalls eine Wandstärke von 0,8 mm oder weniger aufweisen, wobei die Längsnaht des Mantelteils (5) mittels Laser stumpf verschweißt ist, wobei eine Muffe (13) von innen in das Deckelteil (2) eingesetzt ist, in die der Fitting (14) dichtend eingespritzt ist, oder der Fitting (14) selbst von der Innenseite her in die Offnung (3) des Deckelteils (2) eingesetzt ist.

2. Einweg-Getränkefass nach Anspruch 1,
**dadurch gekennzeichnet, dass**
das Mantelteil (5) mit dem Bodenteil (7) und dem Deckelteil (2) so verschweißt sind, dass das Material in unmittelbarer Nähe zu den Längs- bzw. Rundschweißnähten (4) ab einem Innendruck von 7 bar undicht wird, um einem höheren Druckanstieg vorzubeugen.

3. Einweg-Getränkefass nach einem der vorangehenden Ansprüche,
**dadurch gekennzeichnet, dass**
am Deckelteil (2) die Muffe (13) angeschweißt ist.

4. Einweg-Getränkefass nach einem der vorangehenden Ansprüche,
**dadurch gekennzeichnet, dass**
der Manteldurchmesser zwischen 130 und 500 mm und insbesondere zwischen 230 und 290 mm liegt und/oder
die Fasshöhe kleiner als 800 mm ist.

5. Einweg-Getränkefass nach einem der vorangehenden Ansprüche,
**dadurch gekennzeichnet, dass** das Bodenteil (7) und das Deckelteil (2) mittels Laser an das Mantelteil (5) geschweißt sind.

6. Einweg-Getränkefass nach einem der vorangehenden Ansprüche,
**dadurch gekennzeichnet, dass**
der Fitting (14) zumindest teilweise aus Polypropylen, Polyamid oder einem anderen lebensmitteltauglichen Kunststoff gefertigt ist und dicht mit dem Deckelteil (2) verbunden ist.

7. Einweg-Getränkefass nach einem der vorangehenden Ansprüche,
**dadurch gekennzeichnet, dass**
alle Komponenten, die mit der Füllung in Kontakt kommen, entweder mittels einer Desinfektionslösung und/oder durch eine thermische Behandlung von mindestens 85°C bis maximal 300°C sterilisiert sind.

8. Einweg-Getränkefass nach einem der vorangehenden Ansprüche,
**dadurch gekennzeichnet, dass**
mindestens ein Dichtungsmittel (26) in den Strömungskanälen des Fittings (14) über einen aufsteckbaren Zapfkopf (15) geöffnet werden kann.

9. Einweg-Getränkefass nach einem der vorangehenden Ansprüche,
**dadurch gekennzeichnet, dass**
der Fitting (14) vor dem Einsetzen in das Deckelteil (2) in einem Desinfektionsbad sterilisiert ist.

10. Einweg-Getränkefass nach einem der vorangehenden Ansprüche,
**dadurch gekennzeichnet, dass**
auf den Fitting (14) ein Zapfkopf (15) aufgeschoben ist, der sich durch Drehen axial verschieben lässt.

11. Einweg-Getränkefass nach Anspruch 10,
**dadurch gekennzeichnet, dass**
ein Pin (25) im Zapfkopf (15) auf ein Dichtmittel der Flüssigkeitsleitung (22) einwirken kann.

12. Einweg-Getränkefass nachAnspruch 10 oder 11,
**dadurch gekennzeichnet, dass**
der Zapfkopf (15) über Mittel verfügt, die nach einem gewaltsamen Entfernen vom Fitting (14) eine Arretierung am Fitting (14) zerstört und/oder mindestens ein Dichtmittel (26) undicht machen.

13. Verfahren zum Herstellen eines Einweg-Getränkefasses nach einem der vorangehenden Ansprüche,
**dadurch gekennzeichnet, dass**
das Mantelteil (5) zum Verschweißen mittels Laser zu einem Zylinder geformt ist und die beiden zu verschweißenden Blechseiten stumpf aneinanderstoßen und dabei eine Spaltbreite von weniger als 0,2 mm einhalten.

14. Verfahren zum Herstellen eines Einweg-Getränkefasses nach Anspruch 13,
**dadurch gekennzeichnet, dass**
zum Verschweißen mittels Laser das Deckel- bzw. das Bodenteil (2, 7) so an dem Mantelteil (5) ausgerichtet werden, dass der Spalt zwischen den Einzelteilen (2, 5, 7) kleiner als 0,2 mm ist.

15. Verfahren nach Anspruch 13 oder 14,
**dadurch gekennzeichnet, dass** der Fitting (14) vor dem Verschweißen des Deckelteils (2) und des Mantelteils (5) bzw. des Bodenteils (7) von der Innenseite her in die Öffnung (3) des Deckelteils (2) eingesetzt wird.

## Claims

1. Single-use disposable beverage barrel (1), made of a predominantly cylindrical shell part (5), as well as one base and one cover part (2, 7) which are each deep-drawn, provided with an opening (3) in the centre of the cover part (2), said opening being sealed using a plastics material fitting (14), the shell part (5), the base part (7) and the cover part (2) being made of stainless steel,
**characterised in that**
the shell part (5) has a wall thickness of 0.8 mm or less and the base part (7) and the cover part (2) likewise have a wall thickness of 0.8 mm or less, the longitudinal seam of the shell part (5) being laser-butt-welded, a sleeve (13), into which the fitting (14) is injected in a sealing manner, being inserted into the cover part (2) from the inside, or the fitting (14) itself being inserted into the opening (3) of the cover part (2) from the inside.

2. Disposable beverage barrel according to claim 1,
**characterised in that**
the shell part (5) is welded to the base part (7) and cover part (2) in such a way that the material in the direct vicinity of the longitudinal and circumferential weld seams (4) becomes unsealed starting from an internal pressure of 7 bar so as to prevent a greater increase in pressure.

3. Disposable beverage barrel according to any of the preceding claims,
**characterised in that**
the sleeve (13) is welded to the cover part (2).

4. Disposable beverage barrel according to any of the preceding claims,
**characterised in that**
the shell diameter is between 130 and 500 mm and in particular between 230 and 290 mm, and/or the barrel height is less than 800 mm.

5. Disposable beverage barrel according to any of the preceding claims,
**characterised in that**
the base part (7) and cover part (2) are laser-welded to the shell part (5).

6. Disposable beverage barrel according to any of the preceding claims,
**characterised in that**
the fitting (14) is made at least in part from polypropylene, polyamide or another foodstuff-compatible plastics material and is connected to the cover part (2) in a sealing manner.

7. Disposable beverage barrel according to any of the preceding claims,
**characterised in that**
all components which come into contact with the filling are sterilised either using a disinfectant solution and/or by thermal treatment at at least 85 °C to at most 300 °C.

8. Disposable beverage barrel according to any of the preceding claims,
**characterised in that**
at least one sealing means (26) in the flow ducts of the fitting (14) can be opened by way of a plug-in tap head (15).

9. Disposable beverage barrel according to any of the preceding claims,
**characterised in that**
the fitting (14) is sterilised in a disinfectant bath before insertion into the cover part (2).

10. Disposable beverage barrel according to any of the preceding claims,
**characterised in that**
a tap head (15) is slid onto the fitting (14) and can be displaced axially by rotation.

11. Disposable beverage barrel according to claim 10,
**characterised in that**
a pin (25) in the tap head (15) can act on a sealing means of the fluid line (22).

12. Disposable beverage barrel according to either claim 10 or claim 11,
**characterised in that**
the tap head (15) has means which destroy a lock on the fitting (14) and/or unseal at least one sealing means (26) after forcible removal of the fitting (14).

13. Method for producing a disposable beverage barrel according to any of the preceding claims
**characterised in that**
the shell part (5) is shaped into a cylinder for laser-welding, and the two sheet metal faces to be welded bluntly abut one another and in doing so form a gap width of less than 0.2 mm.

14. Method for producing a disposable beverage barrel according to claim 13,
**characterised in that**,
for laser-welding, the cover and base parts (2, 7) are orientated on the shell part (5) in such a way that the gap between the individual parts (2, 5, 7) is less than 0.2 mm.

15. Method according to either claim 13 or claim 14,
**characterised in that**
the fitting (14) is inserted into the opening (3) of the cover part (2) from the inner side before the cover part (2), the casing part (5) and the cover part (7) are welded.

## Revendications

1. Fût de boisson jetable (1) à usage unique, fabriqué à partir d'une partie d'enveloppe (5) principalement cylindrique, de parties de fond et de couvercle (2, 7) embouties, prévu avec une ouverture (3), laquelle est fermée au moyen d'un bouchon (14) en plastique, au centre de la partie de couvercle (2), dans lequel la partie d'enveloppe (5), la partie de fond (7) et la partie de couvercle (2) sont fabriquées en acier inoxydable,
**caractérisé en ce**
**que** la partie d'enveloppe (5) présente une épaisseur de paroi de 0,8 mm ou moins et la partie de fond (7) et la partie de couvercle (2) présentent également une épaisseur de paroi de 0,8 mm ou moins, dans lequel la soudure longitudinale de la partie d'enveloppe (5) est soudée bord à bord par laser, dans lequel un manchon (13) est inséré de l'intérieur dans la partie de couvercle (2), le bouchon (14) étant injecté de manière étanche dans celui-ci, ou le bouchon (14) lui-même est inséré depuis la face interne dans l'ouverture (3) de la partie de couvercle (2).

2. Fût de boisson jetable selon la revendication 1,
**caractérisé en ce**
**que** la partie d'enveloppe (5) est soudée à la partie de fond (7) et à la partie de couvercle (2) de telle sorte que le matériau à proximité directe des soudures longitudinales ou circulaires (4) fuit à partir d'une pression interne de 7 bar afin de prévenir une augmentation de pression plus élevée.

3. Fût de boisson jetable selon l'une des revendications précédentes,
**caractérisé en ce**
**que** le manchon (13) est soudé à la partie de couvercle (2).

4. Fût de boisson jetable selon l'une des revendications précédentes,
**caractérisé en ce**
**que** le diamètre de l'enveloppe se trouve entre 130 et 500 mm et en particulier entre 230 et 290 mm et/ou la hauteur de fût est inférieure à 800 mm.

5. Fût de boisson jetable selon l'une des revendications précédentes,
**caractérisé en ce**
**que** la partie de fond (7) et la partie de couvercle (2) sont soudées par laser à la partie d'enveloppe (5).

6. Fût de boisson jetable selon l'une des revendications précédentes,
**caractérisé en ce**
**que** le bouchon (14) est fabriqué au moins partiellement de polypropylène, de polyamide ou d'une autre matière plastique de qualité alimentaire et est relié de manière étanche à la partie de couvercle (2).

7. Fût de boisson jetable selon l'une des revendications précédentes,
**caractérisé en ce**
**que** tous les composants entrant en contact avec le contenu sont stérilisés au moyen d'une solution désinfectante et/ou par traitement thermique d'au moins 85 °C à 300 °C au maximum.

8. Fût de boisson jetable selon l'une des revendications précédentes,
**caractérisé en ce**
**qu'**au moins un moyen d'étanchéité (26) dans les canaux d'écoulement du bouchon (14) peut être ouvert par le biais d'une tête de soutirage enfichable (15).

9. Fût de boisson jetable selon l'une des revendications précédentes,
**caractérisé en ce**
**que** le bouchon (14) est stérilisé dans un bain désinfectant avant insertion dans la partie de couvercle (2).

10. Fût de boisson jetable selon l'une des revendications précédentes,
**caractérisé en ce**
**qu'**une tête de soutirage (15) est enfilée sur le bouchon (14), laquelle peut se déplacer axialement par rotation.

11. Fût de boisson jetable selon la revendication 10,
**caractérisé en ce**
**qu'**une broche (25) dans la tête de soutirage (15) peut agir sur un moyen d'étanchéité de la conduite de liquide (22).

12. Fût de boisson jetable selon la revendication 10 ou 11,
**caractérisé en ce**
**que** la tête de soutirage (15) dispose de moyens qui après un enlèvement forcé du bouchon (14) détruisent un verrouillage sur le bouchon (14) et/ou font fuir au moins un moyen d'étanchéité (26).

13. Procédé de fabrication d'un fût de boisson jetable selon l'une des revendications précédentes,
**caractérisé en ce**
**que** la partie d'enveloppe (5) est formée en un cylindre pour le soudage par laser et les deux faces de tôle à souder sont adjacentes bord à bord et maintiennent ainsi une largeur de fente de moins de 0,2 mm.

14. Procédé de fabrication d'un fût de boisson jetable selon la revendication 13,
**caractérisé en ce**
**que** pour le soudage par laser les parties de fond et respectivement de couvercle (2, 7) sont orientées au niveau de la partie d'enveloppe (5) de sorte que la fente entre les parties individuelles (2, 5, 7) est inférieure à 0,2 mm.

15. Procédé selon la revendication 13 ou 14,
**caractérisé en ce**
**que** le bouchon (14) est inséré de l'intérieur dans l'ouverture (3) de la partie de couvercle (2) avant le soudage de la partie d'enveloppe (5) et de la partie de couvercle (2) et respectivement de la partie de fond (7).
